# EUROPEAN PATENT SPECIFICATION

(11) **EP 3 031 869 B1**
(45) Date of publication and mention of the grant of the patent: **06.01.2021**
(21) Application number: 14834357.7
(22) Date of filing: 07.08.2014
(51) Int. Cl.: B41M 5/00, C09D 11/106, C09D 11/322, C09D 11/36

(54) **NONAQUEOUS INKJET INK COMPOSITION AND PRINTED MATTER OBTAINED USING SAME**
WASSERFREIE TINTENSTRAHLTINTENZUSAMMENSETZUNG UND DAMIT HERGESTELLTE DRUCKSACHE
COMPOSITION D'ENCRE POUR JET D'ENCRE NON AQUEUSE ET MATIÈRE IMPRIMÉE OBTENUE L'UTILISANT

(30) Priority: 07.08.2013 JP 2013164340
(43) Date of publication of application: 15.06.2016
(73) Proprietor: Sakata INX Corporation, Osaka-shi, Osaka 550-0002 (JP)
(72) Inventor: YODO Takaaki, Osaka-shi Osaka 550-0002 (JP); HIROSE Tadashi, Osaka-shi Osaka 5500002 (JP); AOKI Yoshiyuki, Osaka-shi Osaka 550-0002 (JP); KINJYO Jun, Osaka-shi Osaka 550-0002 (JP); OKAMOTO Takuya, Osaka-shi Osaka 550-0002 (JP)
(74) Representative: Grünecker Patent- und Rechtsanwälte PartG mbB
(86) International application number: PCT/JP2014/070819
(87) International publication number: WO 2015/020128

(56) References cited:
- EP-A1- 2 617 779
- WO-A1-2010/133890
- WO-A1-2010/133890
- WO-A2-2010/133889
- WO-A2-2010/133889
- JP-A- 2013 147 626

## Description

### Technical Field

The present invention relates to a nonaqueous inkjet ink composition suitable for producing large signboard ads, etc., whose printed surface is primarily constituted by vinyl chloride polymer or ethylene-vinyl acetate copolymer, as well as a printed matter obtained by using such ink composition.

### Background Art

In addition to signboard ads with a logo or pattern of bright-colored, sophisticated design, those looking more like photographs showing an exterior of a product, faces of people, etc., are growing in number. In addition, a large number of signboards themselves are larger in size, which has the effect of giving stronger impact on the viewers of the ads. A general method for producing signboard ads has conventionally been to cut out letters from a colored sheet and attach the cutout letters in the case of a logo, or to use various types of printers to create a photographic image. As a result, producing a signboard ad requires a lot of time and effort, and it also presents problems such as having to use large-scale equipment such as a printer.

For this reason, attempts are being made to utilize the inkjet printing method, which allows a design created on a personal computer to be printed directly on a base material, in order to make the production of signboards bearing bright-colored images easier.

Among the features of the inkjet printing method is the wide range of materials that can be utilized as base printing materials, ensuring easy printability on sheets of paper, polymer, metal, and other hard or soft materials. In particular, signboard ads that are installed outdoors must meet such performance requirements as being lightweight, superbly strong and durable, resistant to rain, and inexpensive; accordingly, being able to print easily on polymer sheets that have these characteristics, is a huge advantage.

In addition, ultra-wide format inkjet printers boasting a printing with of 2,000 mm or more have emerged of late, making it now possible to produce large-size printed matter in one go, instead of printing component pieces separately and attaching them together as has conventionally been done, and thus making signboard production much easier.

In general, a type of polymer sheet called "tarpaulin" is often used for signboard ads. Tarpaulin is a composite sheet comprising a core material such as polyester or polyamide and a vinyl polymer such as polyvinyl chloride or ethylene-vinyl acetate copolymer laminated on the top and bottom of the core material.

Inkjet ink compositions used to print on composite sheets like this include nonaqueous inkjet ink compositions based on organic solvents (environmentally friendly organic solvents are used in recent years). Nonaqueous inkjet ink compositions must use materials that offer good wettability, drying property, and fixing property, among others, on polyvinyl chloride, ethylene-vinyl acetate copolymer, and other vinyl polymers that are used as surface materials for composite sheets.

Because of this, use of alkylene glycol monoether monoester and cyclic ester as organic solvents (refer to Patent Literature 1), and use of vinyl polymer as binder resin and environmentally friendly organic solvent containing a specified quantity of polyalkylene glycol dialkyl ether as organic solvent (refer to Patent Literature 2), are known.

In recent years, however, the demand for higher printing speed has given rise to the problem of insufficient "filling of solid areas" (hereinafter referred to as "solid-filling property") when printed with conventional nonaqueous inkjet ink compositions (particularly nonaqueous inkjet ink compositions that use environmentally friendly organic solvents).

Patent Literature 3 discloses a non-aqueous inkjet ink composition comprising polyvinyl acetate resin, pigment, pigment dispersant, about 45 wt% diethylene glycol ethyl methyl ether, 12 wt% propylene carbonate, and 6 wt% tetraethylene glycol dimethyl ether.

Patent Literature 4 and 5 disclose non-aqueous inkjet ink compositions comprising 25-40% by weight propylene carbonate, 40-70% by weight of glycol ether solvent which can be diethylene glycol methylethyl ether, acrylic resin, and a pigment dispersion.

### Background Art Literature

### Patent Literature

Patent Literature 1: Japanese Patent Laid-open No. 2005-200469
Patent Literature 2: International Patent Laid-open No. WO2007/072804
Patent Literature 3: EP 2 617 779 A1
Patent Literature 4: International Patent Laid-open No. WO2010/133890
Patent Literature 5: International Patent Laid-open No. WO2010/133889

### Summary of the Invention

### Problems to Be Solved by the Invention

A problem to be solved by the present invention is to provide a nonaqueous inkjet ink composition offering excellent wettability, fixing property, solid-filling property, anti-mottling property as well as excellent discharge stability even when printed at high speed on targets whose printing surface is constituted by polyvinyl chloride, ethylene-vinyl acetate copolymer, or other vinyl polymer.

### Means for Solving the Problems

The inventors of the present invention studied in earnest to solve the aforementioned problem and consequently found that the aforementioned problem could be solved by a nonaqueous inkjet ink composition according to appended claim 1.

In other words, the present invention relates to: (1) a nonaqueous inkjet ink composition comprising a binder resin, a pigment, a pigment dispersant, and an organic solvent, wherein as the organic solvent, diethylene glycol ethyl methyl ether is contained by 40 to 80 percent by mass in the nonaqueous inkjet ink composition along with propylene carbonate contained by 7 to 50 percent by mass in the nonaqueous inkjet ink composition, excluding any composition that contains acetylene surface-active agent,
wherein the nonaqueous inkjet ink composition further comprises, as organic solvent, an alkylene glycol derivative whose flash point is 50 to 150°C or higher, and
wherein the binder resin contains an acrylic resin and at least one type of vinyl polymer selected from the group consisting of vinyl chloride polymer, vinyl chloride-vinyl acetate copolymer, and ethylene-vinyl acetate copolymer.

The present invention is also directed to the use of the nonaqueous inkjet ink composition for non-absorbent base materials.

Also provided is a printed matter obtained by printing the nonaqueous inkjet ink composition according to the present invention, on a base material whose surface layer, at least, is constituted by vinyl chloride polymer or ethylene-vinyl acetate copolymer.

Preferred embodiments of the present invention are set forth in the dependent claims.

### Effects of the Invention

The nonaqueous inkjet ink composition demonstrates such benefits as sufficiently high flash point, excellent safety, prevention of whiteout, good solid-filling property and anti-mottling property, and good discharge stability from the inkjet nozzle.

### Mode for Carrying Out the Invention

### (Binder Resin)

For the binder resin constituting the nonaqueous inkjet ink composition as proposed by the present invention, an acrylic resin and at least one type of vinyl polymer selected from the group consisting of vinyl chloride polymer, vinyl chloride-vinyl acetate copolymer, and ethylene-vinyl acetate copolymer are used.

Examples of the vinyl chloride polymer include copolymers of a homopolymer of vinyl chloride (polyvinyl chloride) or other monomer that can be copolymerized with vinyl chloride in small quantity (such as vinyl acetate, ethylene or vinylidene chloride).

For the vinyl chloride-vinyl acetate copolymer and ethylene-vinyl acetate copolymer, any such copolymers normally used in this type of ink may be used without limitation in any way.

The molecular weight of binder resin is preferably around 2,000 to 100,000 in weight-averaged molecular weight, from the viewpoints of solubility in the solvent, viscosity of the obtained ink composition, discharge stability, and so on. Particularly when printing on a base material whose surface layer is constituted by vinyl chloride polymer (especially polyvinyl chloride) or ethylene-vinyl acetate copolymer, a preferred binder resin is vinyl chloride polymer (especially polyvinyl chloride).

Examples of the acrylic resin include polymers constituted by (meth)acrylates that are soluble in organic solvents, as well as copolymers thereof. The aforementioned (meth)acrylates include ethyl, propyl, or butyl (meth)acrylates and other alkyl (meth)acrylates; and hydroxy methyl, hydroxy ethyl, hydroxy propyl, hydroxy butyl, or hydroxy pentyl (meth)acrylates, and other hydroxy alkyl (meth)acrylates, among others.

Specific examples of the acrylic resin include, among others, BR-60 (Tg: 75°C), BR-64 (Tg: 55°C), BR-75 (Tg: 90°C), BR-77 (Tg: 80°C), BR-87 (Tg: 105°C), BR-88 (Tg: 105°C), BR-90 (Tg: 65°C), BR-93 (Tg: 50°C), BR-95 (Tg: 80°C), BR-105 (Tg: 50°C), BR-106 (Tg: 50°C), BR-107 (Tg: 50°C), BR-108 (Tg: 90°C), BR-113 (Tg: 75°C), BR-115 (Tg: 50°C), and BR-116 (Tg: 50°C), all manufactured by Mitsubishi Rayon.

For the binder resin, vinyl chloride polymer is combined with acrylic resin (for improved drying property, blocking property, and coating film resistance of the ink composition).

Preferably the Tg of the acrylic resin is 70°C or higher from the viewpoint of further improving the drying property, blocking property, and coating film resistance.

The total use quantity of the vinyl resin and acrylic resin, is 1 to 15 percent by mass, or preferably 1 to 10 percent by mass, or more preferably 1 to 7 percent by mass, relative to the total quantity of the nonaqueous inkjet ink composition.

If the total use quantity of the binder resin is less than 1 percent by mass, the fixing property with respect to the base material becomes insufficient; if the total use quantity exceeds 15 percent by mass, on the other hand, the solid content increases too much and the discharge stability drops as a result.

Meanwhile, combined use of resins other than the aforementioned binder resin, such as styrene-acrylic resin, styrene-maleic acid resin, rosin resin, rosin ester resin, petroleum resin, coumarone indene resin, terpene phenol resin, phenol resin, urethane resin, melamine resin, urea resin, epoxy resin, cellulose resin, xylene resin, alkyd resin, aliphatic hydrocarbon resin, butyral resin, maleic acid resin, and fumaric acid resin is also permitted so long as doing so does not cause the performance to drop.

### (Pigment)

For the pigment constituting the nonaqueous inkjet ink composition as proposed by the present invention, any known inorganic pigment, organic pigment conventionally used in nonaqueous inkjet ink compositions may be used.

Specific examples of known conventional inorganic pigments include carbon black, titanium oxide, zinc white, zinc oxide, lithopone, iron oxide, aluminum oxide, silicon dioxide, kaolinite, montmorillonite, talc, barium sulfide, calcium carbonate, silica, alumina, cadmium red, iron oxide red, molybdenum red, chrome vermillion, molybdate orange, yellow lead, chrome yellow, cadmium yellow, yellow iron oxide, titanium yellow, chrome oxide, viridian, cobalt green, titanium cobalt green, cobalt chrome green, deep sea blue, ultramarine blue, iron blue, cobalt blue, cerulean blue, manganese violet, cobalt violet and mica, among others.

Organic pigments are those of azo type, azo methin type, polyazo type, phthalocyanine type, quinacridone type, anthraquinone type, indigo type, thioindigo type, quinophthalone type, benzimidazolone type, isoindoline type, isoindolinone type, and so on, where specific examples include, according to the color index, pigment black 7, pigment blue 15, 15:1, 15:3, 15:4, 15:6, 60, pigment green 7, 36, pigment red 9, 48, 49, 52, 53, 57, 97, 122, 149, 168, 177, 178, 179, 206, 207, 209, 242, 254, 255, pigment violet 19, 23, 29, 30, 37, 40, 50, pigment yellow 12, 13, 14, 17, 20, 24, 74, 83, 86, 93, 94, 95, 109, 110, 117, 120, 125, 128, 137, 138, 139, 147, 148, 150, 151, 154, 155, 166, 168, 180, 185, and pigment orange 36, 43, 51, 55, 59, 61, 71, or 74.

These pigments may be used alone or two or more types may be combined, where the use quantity is 1 to 10 percent by mass, or preferably 2 to 7 percent by mass, relative to the total quantity of the nonaqueous inkjet ink composition. If the use quantity of pigment is less than 1 percent by mass, the coloring property tends to be insufficient; if the use quantity of pigment is more than 10 percent by mass, on the other hand, the viscosity tends to rise and the flowability of ink tends to drop.

### (Pigment Dispersant)

Next, for the pigment dispersant constituting the nonaqueous inkjet ink composition as proposed by the present invention, any ionic or non-ionic surface-active agent, or anionic, cationic, or non-ionic polymer compound may be used.

Of these, polymer compounds are preferred and, for example, the carbodiimide compounds, Ajisper (manufactured by Ajinomoto), Solsperse (manufactured by Lubrizol), Disperbyk (manufactured by BYK), and Efka (manufactured by Efka Additives) as described in Japanese Patent Laid-open No. 2004-083872, International Patent Laid-open No. WO2003/076527, and International Patent Laid-open No. WO2004/000950 are preferred. These pigment dispersants may be used alone or two or more types may be combined.

Any of the aforementioned pigment dispersants may be selected as deemed appropriate according to the type of pigment and the type of organic solvent used.

### (Organic Solvent)

For the organic solvent constituting the nonaqueous inkjet ink composition as proposed by the present invention, diethylene glycol ethyl methyl ether is used by 40 to 80 percent by mass in the nonaqueous inkjet ink composition along with propylene carbonate used by 7 to 50 percent by mass, or preferably 9 to 40 percent by mass from the viewpoint of improving the drying property, or even more preferably 9 to 15 percent by mass, in the nonaqueous inkjet ink composition.

Use of diethylene glycol ethyl methyl ether and propylene carbonate in these ranges leads to excellent wettability, fixing property, solid-filling property, as well as excellent discharge stability even at high printing speed.

In addition, alkylene glycol derivative whose flash point is 50 to 150°C is combined to adjust the drying property and further improve the anti-mottling property.

Examples of such alkylene glycol derivative whose flash point is 50 to 150°C include, among others, ethylene glycol diethyl ether, ethylene glycol dimethyl ether, diethylene glycol dimethyl ether, diethylene glycol diethyl ether, diethylene glycol dibutyl ether, triethylene glycol dimethyl ether, triethylene glycol diethyl ether, tetraethylene glycol dimethyl ether and other (poly)ethylene glycol dialkyl ethers; propylene glycol dimethyl ether, propylene glycol diethyl ether, dipropylene glycol dimethyl ether, dipropylene glycol diethyl ether, tetraethylene glycol dimethyl ether and other (poly) propylene glycol dialkyl ethers; propylene glycol monomethyl ether, propylene glycol monoethyl ether, propylene glycol monobutyl ether, dipropylene glycol monomethyl ether, dipropylene glycol monoethyl ether and other (poly) propylene glycol monoalkyl ethers; propylene glycol monomethyl ether acetate, propylene glycol monoethyl ether acetate, propylene glycol monobutyl ether acetate, dipropylene glycol monomethyl ether acetate, dipropylene glycol monoethyl ether acetate, dipropylene glycol monobutyl ether acetate and other (poly) propylene glycol monoalkyl ether monoalkyl esters; ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, triethylene glycol monoethyl ether, triethylene glycol monobutyl ether, tetraethylene glycol monobutyl ether and other (poly)ethylene glycol monoethers; ethylene glycol monomethyl acetate, ethylene glycol monoethyl acetate, ethylene glycol monobutyl acetate, diethylene glycol monomethyl acetate, triethylene glycol monomethyl acetate and other (poly)ethylene glycol monoesters; ethylene glycol diacetate, diethylene glycol diacetate, triethylene glycol diacetate and other (poly)ethylene glycol diesters; and ethylene glycol monomethyl ether acetate, ethylene glycol monoethyl ether acetate, ethylene glycol monobutyl ether acetate, diethylene glycol monomethyl ether acetate, diethylene glycol monoethyl ether acetate, diethylene glycol monobutyl ether acetate, diethylene glycol propyl ether acetate, triethylene glycol monobutyl ether, triethylene glycol ethyl ether acetate, triethylene glycol butyl ether acetate and other (poly)ethylene glycol monoether monoesters.

Among the alkylene glycol derivatives whose flash point is 50 to 150°C, dipropylene glycol monomethyl ether acetate, dipropylene glycol dimethyl ether, and tetraethylene glycol dimethyl ether are preferred, and dipropylene glycol dimethyl ether is especially preferred.

The content of the alkylene glycol derivative whose flash point is 50 to 150°C in the nonaqueous inkjet ink composition is preferably 1 to 30 percent by mass, or even more preferably 4 to 15 percent by mass.

In addition, the total quantity of organic solvent is preferably such that the organic solvent accounts for 80 to 98 percent by mass of all ink. If the total quantity exceeds 98 percent by mass, the printability of the obtained ink drops; if the total quantity is less than 80 percent by mass, on the other hand, rise in the viscosity of ink is induced and the discharge property of ink from the nozzle tends to drop, which is not desirable.

### (Other Components)

Furthermore, the nonaqueous inkjet ink composition as proposed by the present invention may also use various types of additives, such as surface-active agent, plasticizer, surface conditioner, UV blocker, photostabilizer, and antioxidant, as necessary.

### (Manufacture of Nonaqueous Inkjet Ink Composition)

Next, a method for manufacturing the nonaqueous inkjet ink composition as proposed by the present invention, using the foregoing materials, is explained.

The nonaqueous inkjet ink composition as proposed by the present invention may be obtained by dispersing and mixing the foregoing materials using a wet circulation mill, bead mill, ball mill, sand mill, attritor, roll mill, DCP mill, agitator, Henschel mixer, colloid mill, ultrasonic homogenizer, high-pressure homogenizer (Microfluidizer, Nanomizer, Ultimizer, Genus PY, DeBEE2000, etc.), pearl mill, or other dispersion machine, for example, to adjust the viscosity of the nonaqueous inkjet ink composition to fall between 2 and 10 mPa•s.

The content of all organic solvent in the nonaqueous inkjet ink composition as proposed by the present invention corresponds to the total quantity of ink composition less the total quantity of binder resin, pigment, pigment dispersant, and other additives used as necessary, but preferably it is changed as deemed appropriate so that the viscosity of ink falls within the aforementioned range.

The obtained nonaqueous inkjet ink composition as proposed by the present invention can be used on base materials whose surface layer, at least, is constituted by vinyl chloride polymer or ethylene-vinyl acetate copolymer, in such a way that the base materials are printed with the nonaqueous inkjet ink composition, using an inkjet printer.

### (Application for Use)

The nonaqueous inkjet ink composition as proposed by the present invention can be used for known applications, but it is particularly suitable on the surface layers of base materials constituted by non-absorbent materials. Examples of non-absorbent materials include metal, resin, and ceramics; of these, however, preferably the present invention is used on the surface layers of base materials made of resin and furthermore it is used on such surface layers whose resin is constituted by vinyl chloride polymer or ethylene-vinyl acetate copolymer, from the viewpoint of printability such as solid-filling property and solid printing.

### Examples

The present invention is explained in greater detail below by citing examples; however, it should be noted that the present invention is not limited to these examples. Unless otherwise specified, "percent" refers to "percent by mass" and "part" refers to "parts by mass."

### (Examples 1 to 22 and Comparative Examples 1 to 3)

### (Manufacture of Base Ink of Each Color)

### <Manufacture of Nonaqueous Inkjet Base Black Ink>

Ten parts of pigment dispersant (Solsperse 39000) was dissolved in 65 parts of diethylene glycol ethyl methyl ether, into which 25 parts of carbon black MA-70 (manufactured by Mitsubishi Chemical) was mixed under agitation as pigment, after which the mixture was kneaded using a bead mill, to obtain nonaqueous inkjet base ink.

### <Manufacture of Nonaqueous Inkjet Base Cyan Ink>

Ten parts of pigment dispersant (Solsperse 56000) was dissolved in 65 parts of diethylene glycol ethyl methyl ether, into which 25 parts of C. I. PB15:4 (GLBO, manufactured by BASF) was mixed under agitation as pigment, after which the mixture was kneaded using a bead mill, to obtain nonaqueous inkjet base ink.

### <Manufacture of Nonaqueous Inkjet Base Yellow Ink>

Ten parts of pigment dispersant (PB822) was dissolved in 65 parts of diethylene glycol ethyl methyl ether, into which 25 parts of C. I. PY135 (4G01, manufactured by Clariant) was mixed under agitation as pigment, after which the mixture was kneaded using a bead mill, to obtain nonaqueous inkjet base ink.

### <Manufacture of Nonaqueous Inkjet Base Magenta Ink>

Ten parts of pigment dispersant (PB822) was dissolved in 65 parts of diethylene glycol ethyl methyl ether, into which 25 parts of C. I. PR122 (RGT, manufactured by DIC) was mixed under agitation as pigment, after which the mixture was kneaded using a bead mill, to obtain nonaqueous inkjet base ink.

### <Manufacture of Nonaqueous Inkjet Ink Compositions>

According to the blends in Table 1 (the blending ratio of each material is expressed in percent by mass), the respective materials were mixed under agitation to obtain the nonaqueous inkjet ink compositions in Examples 1 to 22 and Comparative Examples 1 to 3. Example 7 is not in accordance with the present invention.

### <Printing Method and Printed Matters>

Polyvinyl chloride sheets were printed in a high-speed printing mode using a commercial inkjet printer charged with each of the nonaqueous inkjet ink compositions in Examples 1 to 22 and Comparative Examples 1 to 3, to obtain the printed matter in Examples 1 to 22 and Comparative Examples 1 to 3.

### <Evaluation>

The printed matter using the nonaqueous inkjet ink compositions in Examples 1 to 22 and Comparative Examples 1 to 3 were evaluated for the following characteristics. In the evaluations below, A and B represent levels fit for practical use, while C and D represent levels presenting problems in using the ink composition as a product.

### (Viscosity)

Viscosity was measured on the nonaqueous inkjet ink compositions at 25°C in Examples 1 to 22 and Comparative Examples 1 to 3 using a viscometer (RE100L manufactured by Toki Sangyo).

### (Drying Property of Printed Matter)

Polyvinyl chloride sheets (product name: MD5, manufactured by Metamark) were solid-printed in a high-speed printing mode using a commercial inkjet printer charged with each of the nonaqueous inkjet ink compositions in Examples 1 to 22 and Comparative Examples 1 to 3, after which the printed sheets were rolled and left at 25°C for one day and then evaluated for drying property by removing the printed sheet from the roll and visually evaluating whether the surface contacting the printed area and on which nothing was printed was smudged. The evaluation standards below are used to make judgment on drying property.

### Evaluation standards

A: Surface contacting the printed area and on which nothing was printed was not smudged
B: Surface contacting the printed area and on which nothing is printed is slightly smudged
C: Surface contacting the printed area and on which nothing was printed was heavily smudged

### (Drying Property of Printed Matter 2)

Polyvinyl chloride sheets (product name: MD5, manufactured by Metamark) were printed solid in a standard mode using a commercial inkjet printer charged with each of the nonaqueous inkjet ink compositions in Examples 1 to 22 and Comparative Examples 1 to 3, after which the printed sheets were left at 25°C for 3 minutes and then tested on an ink set tester (manufactured by Toyo Seiki) by layering the printed sheet and the reverse side of a polyvinyl chloride sheet and visually evaluating whether the reverse side of the polyvinyl chloride sheet was smudged. The evaluation standards below were used to evaluate drying property.

### Evaluation standards

A: Reverse side of the polyvinyl chloride sheet was not smudge
B: Reverse side of the polyvinyl chloride sheet was slightly smudged
C: Reverse side of the polyvinyl chloride sheet was heavily smudged

### (Solid-filling Property)

Polyvinyl chloride sheets (product name: Kapjet Gloss Banner, manufactured by Filmolux) were printed solid in a high-speed printing mode using each of the nonaqueous inkjet ink compositions in Examples 1 to 22 and Comparative Examples 1 to 3, after which the solid areas were visually evaluated for good filling, or specifically whether or not the image had white spots.

### Evaluation standards

A: There were no white spots
B: There were some white spots
C: There were many white spots

### (Anti-mottling Property)

Polyvinyl chloride sheets (product name: Kapjet Gloss Banner, manufactured by Filmolux) were printed solid by mixed color (red, blue, and green) in a standard mode using each of the nonaqueous inkjet ink compositions in Examples 1 to 22 and Comparative Examples 1 to 3, after which the image was visually evaluated for presence or absence of mottling.

### Evaluation standards

A: There was no mottling
B: There was some mottling
C: There was a lot of mottling

### (Discharge Stability)

Polyvinyl chloride sheets (product name: MD5, manufactured by Metamark) were printed using each of the nonaqueous inkjet ink compositions in Examples 1 to 22 and Comparative Examples 1 to 3, and evaluated for discharge stability based on the number of sheets having non-printed areas.

### Evaluation standards

A: Non-printed areas appeared on the 71st or subsequent sheet or did not appear until the 100th sheet
B: Non-printed areas appeared between the 51st sheet and 70th sheet
C: Non-printed areas appeared between the 31st sheet and 50th sheet
D: Non-printed areas appeared before the 30th sheet

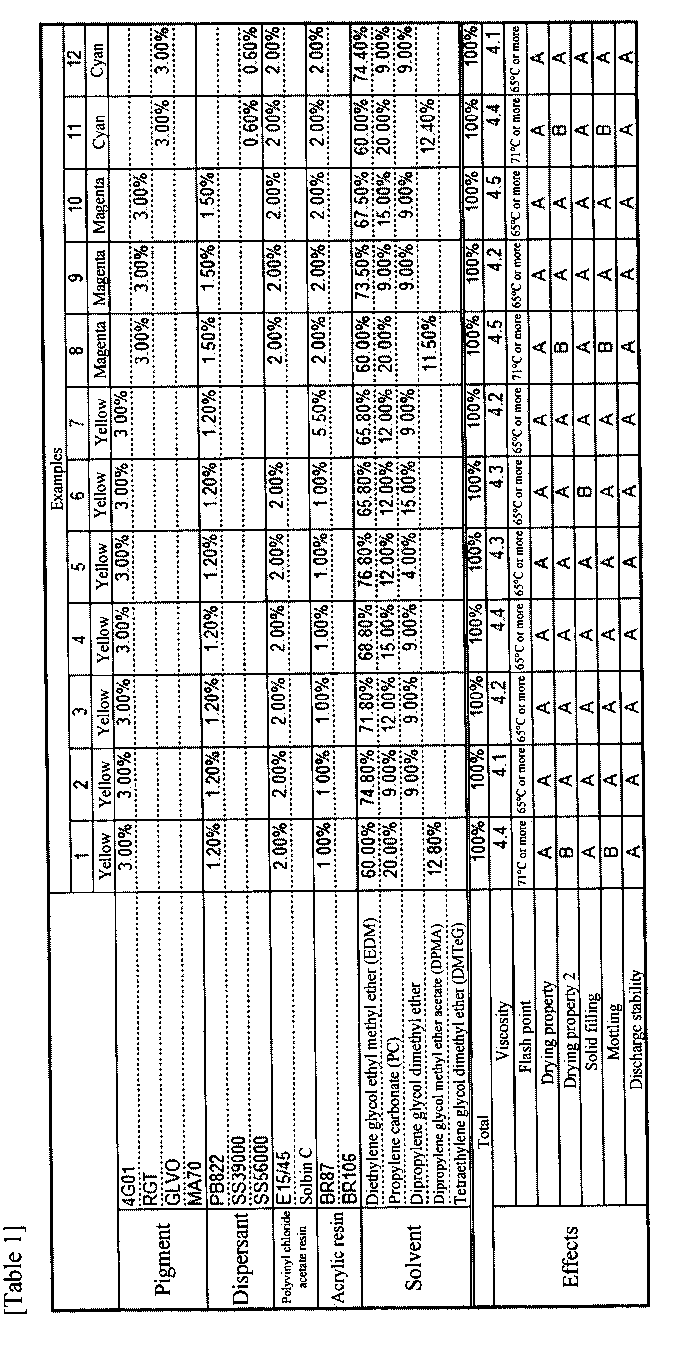

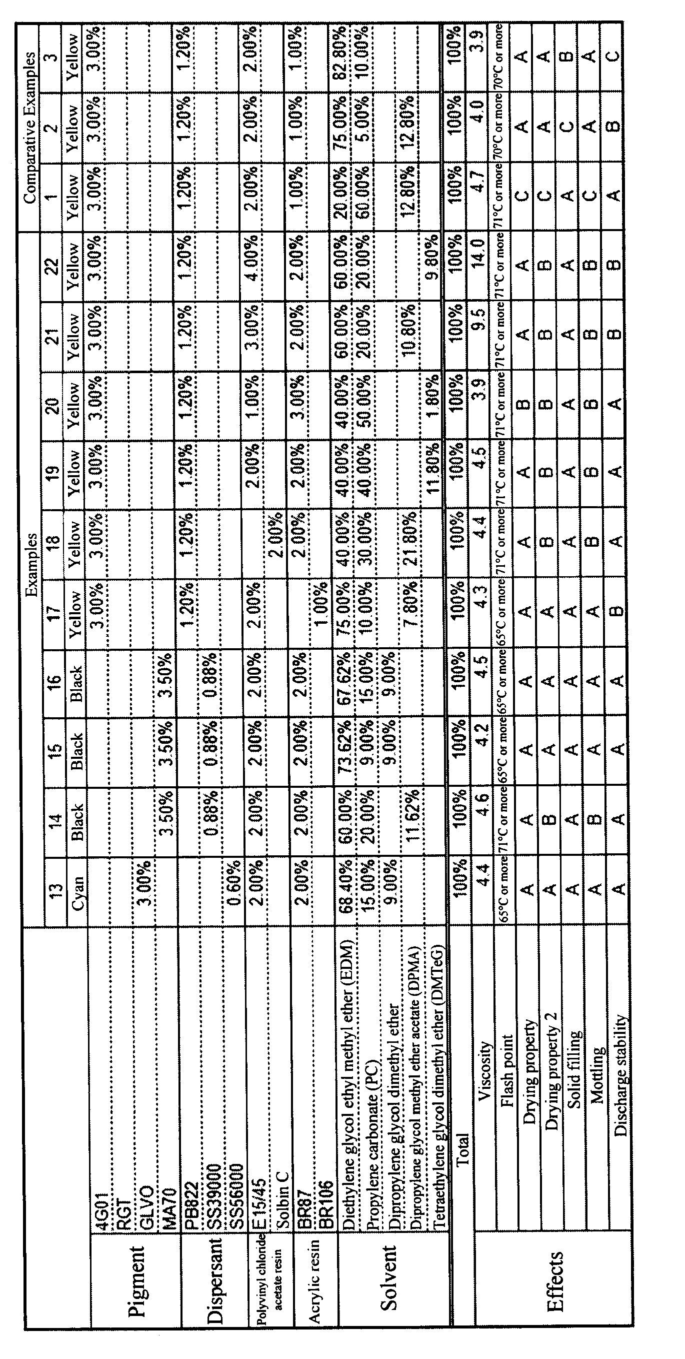

According to the results of Examples 1 to 22 shown in Table 1, any nonaqueous inkjet ink composition conforming to the composition proposed by the present invention would be appropriate for inkjet printing in terms of the viscosity of ink composition. In addition, the obtained ink would offer excellent drying property, solid-filling property, and discharge stability while causing minimal mottling. Furthermore, the obtained ink would also offer particularly excellent anti-mottling property according to the results of Examples 2 to 7, 9, 10, 12, 13 and 15 to 17.

On the other hand, Comparative Example 1, where the content of diethylene glycol ethyl methyl ether in the ink composition was low at 20.00 percent and the content of propylene carbonate was high at 60.00 percent, exhibited particularly poor drying property. Also, Comparative Example 2, where the content of propylene carbonate was low at 5.00 percent, resulted in good drying property but poor solid-filling properly. In addition, Comparative Example 3, where the content of diethylene glycol ethyl methyl ether was high at 82.80 percent, resulted in poor discharge stability.

## Claims

1. A nonaqueous inkjet ink composition comprising:
a binder resin,
a pigment,
a pigment dispersant, and
an organic solvent,
wherein, as the organic solvent, diethylene glycol ethyl methyl ether is contained by 40 to 80 percent by mass in the nonaqueous inkjet ink composition along with propylene carbonate contained by 7 to 50 percent by mass in the nonaqueous inkjet ink composition, excluding any composition that contains acetylene surface-active agent,
wherein the nonaqueous inkjet ink composition further comprises, as an organic solvent, an alkylene glycol derivative whose flash point is 50 to 150°C or higher, and
wherein the binder resin contains an acrylic resin and at least one type of vinyl polymer selected from the group consisting of vinyl chloride polymer, vinyl chloride-vinyl acetate copolymer, and ethylene-vinyl acetate copolymer.

2. The nonaqueous inkjet ink composition according to claim 1, **characterized in that** the alkylene glycol derivative whose flash point is 50 to 150°C or higher is at least one type of substance selected from dipropylene glycol methyl ether acetate, dipropylene glycol dimethyl ether, and tetraethylene glycol dimethyl ether.

3. The nonaqueous inkjet ink composition according to claim 2, **characterized in that** the alkylene glycol derivative whose flash point is 50 to 150°C or higher is dipropylene glycol dimethyl ether.

4. Use of the nonaqueous inkjet ink composition according to any one of claims 1 to 3 for non-absorbent base materials.

5. A printed matter obtained by printing the nonaqueous inkjet ink composition according to any one of claims 1 to 4, on a base material whose surface layer, at least, is constituted by vinyl chloride polymer or ethylene-vinyl acetate copolymer.

## Patentansprüche

1. Nichtwässrige Tintenstrahl-Tintenzusammensetzung, umfassend:
ein Bindemittelharz,
ein Pigment,
ein Pigmentdispergiermittel und
ein organisches Lösungsmittel,
wobei Diethylenglykolethylmethylether als das organische Lösungsmittel zu 40 bis 80 Massenprozent in der nichtwässrigen Tintenstrahl-Tintenzusammensetzung enthalten ist, zusammen mit Propylencarbonat, das zu 7 bis 50 Massenprozent in der nichtwässrigen Tintenstrahl-Tintenzusammensetzung enthalten ist, ausgenommen jegliche Zusammensetzung, die ein oberflächenaktives Acetylen-Mittel enthält,
wobei die nichtwässrige Tintenstrahl-Tintenzusammensetzung als ein organisches Lösungsmittel ferner ein Alkylenglykolderivat umfasst, dessen Flammpunkt 50 bis 150 ° C oder höher beträgt, und
wobei das Bindemittelharz ein Acrylharz und mindestens eine Art von Vinylpolymer enthält, ausgewählt aus der Gruppe, bestehend aus Vinylchloridpolymer, Vinylchlorid-Vinylacetat-Copolymer und Ethylen-Vinylacetat-Copolymer.

2. Nichtwässrige Tintenstrahl-Tintenzusammensetzung gemäß Anspruch 1, **dadurch gekennzeichnet, dass** es sich bei dem Alkylenglykolderivat, dessen Flammpunkt 50 bis 150 ° C oder höher beträgt, um mindestens eine Substanzart handelt, ausgewählt aus Dipropylenglykolmethyletheracetat, Dipropylenglykoldimethylether, und Tetraethylenglykoldimethylether.

3. Nichtwässrige Tintenstrahl-Tintenzusammensetzung gemäß Anspruch 2, **dadurch gekennzeichnet, dass** es sich bei dem Alkylenglykolderivat, dessen Flammpunkt 50 bis 150 ° C oder höher beträgt, um Dipropylenglykoldimethylether handelt.

4. Verwendung der nichtwässrigen Tintenstrahl-Tintenzusammensetzung gemäß einem der Ansprüche 1 bis 3 für nicht absorbierende Grundmaterialien.

5. Drucksache, die durch Drucken der nichtwässrigen Tintenstrahl-Tintenzusammensetzung gemäß einem der Ansprüche 1 bis 4 auf ein Grundmaterial, dessen Oberflächenschicht mindestens aus Vinylchloridpolymer oder Ethylen-Vinylacetat-Copolymer besteht, erhalten wird.

## Revendications

1. Composition d'encre pour jet d'encre non aqueuse, comprenant :
une résine liante,
un pigment,
un dispersant de pigment, et
un solvant organique,
dans laquelle, comme solvant organique, la composition d'encre pour jet d'encre non aqueuse contient du diéthylène glycol éthyl méthyl éther à raison de 40 % à 80 % en masse ainsi que du carbonate de propylène à raison de 7 % à 50 % en masse, en excluant toute composition contenant un agent tensioactif à acétylène,
dans laquelle la composition d'encre pour jet d'encre non aqueuse comprend en outre, comme solvant organique, un dérivé alcène glycol dont le point d'éclair est compris dans une plage de 50 °C à 150 °C ou plus, et
dans laquelle la résine liante contient une résine acrylique et au moins un type de polymère vinylique sélectionné parmi le groupe constitué par les polymères de chlorure de vinyle, les copolymères chlorure de vinyle - acétate de vinyle, et les copolymères éthylène - acétate de vinyle.

2. Composition d'encre pour jet d'encre non aqueuse selon la revendication 1, **caractérisée en ce que** le dérivé alcène glycol dont le point d'éclair est compris dans une plage de 50 °C à 150°C ou plus est au moins un type de substance sélectionné parmi le dipropylène glycol méthyl éther acétate, le dipropylène glycol diméthyl éther, et le tétraéthylène glycol diméthyl éther.

3. Composition d'encre pour jet d'encre non aqueuse selon la revendication 2, **caractérisée en ce que** le dérivé alcène glycol dont le point d'éclair est compris dans une plage de 50 °C à 150 °C ou plus est le dipropylène glycol diméthyl éther.

4. Utilisation de la composition d'encre pour jet d'encre non aqueuse selon l'une quelconque des revendications 1 à 3 pour des matériaux de base non absorbants.

5. Matériel imprimé obtenu en imprimant la composition d'encre pour jet d'encre non aqueuse selon l'une quelconque des revendications 1 à 4, sur un matériau de base dont la couche de surface au moins est constituée d'un polymère de chlorure de vinyle ou d'un copolymère éthylène-acétate de vinyle.
